# EUROPEAN PATENT APPLICATION

(11) **EP 3 260 789 A1**
(43) Date of publication of application: **27.12.2017**
(21) Application number: 15871323.0
(22) Date of filing: 18.02.2015
(51) Int. Cl.: F24F 11/02, F25B 1/00, F25B 13/00, F25B 49/02

(54) **AIR CONDITIONING SYSTEM**

(71) Applicant: Mitsubishi Electric Corporation, Chiyoda-ku Tokyo 100-8310 (JP)
(72) Inventor: NAGAE, Takao, Tokyo 100-8310 (JP); OYA, Ryo, Tokyo 100-8310 (JP)
(74) Representative: Pfenning, Meinig & Partner mbB
(86) International application number: PCT/JP2015/054357
(87) International publication number: WO 2016/132466

(57) **Abstract**

Provided is an air-conditioning system (100) capable of suppressing power consumption and maintaining the indoor temperature at a constant level. The air-conditioning system includes a refrigerant circuit in which a compressor (5), a heat source-side heat exchanger (6), an expansion device (11), and a load-side heat exchanger (10) are sequentially connected via a pipe, an inverter (16) that drives the compressor (5), an indoor temperature sensor (14) that detects an indoor temperature, and a controller (13) that receives a thermostat ON signal and a thermostat OFF signal and controls the inverter (16) according to the thermostat ON signal and the thermostat OFF signal. The controller (13) assumes, upon receipt of the thermostat OFF signal, that the indoor temperature detected at that time is a target temperature, and regulates an output frequency of the inverter (16) so as to maintain a difference between the indoor temperature and the target temperature in a predetermined range.

## Description

### Technical Field

The present invention relates to an air-conditioning system.

### Background Art

Some of existing air-conditioning systems are configured to control a compressor with an inverter so as to bring the indoor temperature close to an optimal temperature. In such an air-conditioning system, a target temperature is specified, and the operation of the compressor is controlled on the basis of the indoor temperature, outlet temperature, and suction pressure and discharge pressure of the compressor. To be more detailed, the conventional air-conditioning system is configured to detect at least one of the outlet temperature, and the suction pressure and discharge pressure of the compressor, in addition to the indoor temperature, and the operation of the compressor is controlled so as to bring the detected values close to predetermined target values. Here, normally the target temperature is set through operation of a remote controller, and the target temperature, the indoor temperature, the outlet temperature, and the suction pressure and discharge pressure of the compressor are processed into signals in a controller of the air-conditioning system, and then the controller outputs an inverter control signal to the compressor.

While many of the air-conditioning systems popularly utilized in Japan are configured to perform the inverter control of the compressor as above, the air-conditioning systems popularly utilized in the North America are generally controlled by a thermostat, which is a remote controller having a controller function (hereinafter, local thermostat), sold separately from the air-conditioning system. The local thermostat is configured to detect the indoor temperature, compare the detected indoor temperature with the target temperature, and output a signal to turn the compressor on or off to the controller according to the comparison result.

However, in the North American air-conditioning system controlled by the local thermostat, the local thermostat only outputs the signal to turn the compressor on or off, which is insufficient to appropriately control the compressor. Accordingly, an air-conditioning system has been proposed that is configured to control the compressor according to the switching frequency of the signal to turn the compressor on or off output from the local thermostat (see, for example, Patent Literature 1).

### Citation List

### Patent Literature

Patent Literature 1: Japanese Unexamined Patent Application Publication No. 2008-116068

### Summary of Invention

### Technical Problem

In the air-conditioning system according to Patent Literature 1, the local thermostat only transmits the signal to turn the compressor on or off to the controller that controls the operation of the compressor. Accordingly, the local thermostat frequently transmits the signal to turn the compressor on or off to bring the indoor temperature close to the target temperature, and hence the compressor is repeatedly activated and stopped, which leads to an increase in power consumption of the air-conditioning system. In addition, it is difficult to maintain the indoor temperature at a constant level by repeatedly activating and stopping the compressor, and therefore the comfort of the space is degraded.

The present invention has been accomplished in view of the foregoing problem, and provides an air-conditioning system capable of suppressing power consumption and maintaining the indoor temperature at a constant level. Solution to Problem

In an aspect, the present invention provides an air-conditioning system including a refrigerant circuit in which a compressor, a heat source-side heat exchanger, an expansion device, and a load-side heat exchanger are sequentially connected via a pipe, an inverter that drives the compressor, an indoor temperature sensor that detects an indoor temperature, and a controller that receives a thermostat ON signal and a thermostat OFF signal, and controls the inverter according to the thermostat ON signal and the thermostat OFF signal. The controller assumes, upon receipt of the thermostat OFF signal, that the indoor temperature detected when the thermostat OFF signal is received is a target temperature, and regulates an output frequency of the inverter so as to maintain a difference between the indoor temperature and the target temperature in a predetermined range.

### Advantageous Effects of Invention

According to the present invention, the air-conditioning system configured as above, the controller that controls the compressor assumes, upon receipt of the thermostat OFF signal, that the indoor temperature at that time is the target temperature, and controls the output frequency of the inverter so as to maintain the difference between the indoor temperature and the target temperature in the predetermined range. Therefore, the power consumption of the air-conditioning system can be suppressed, and the indoor temperature can be maintained at a constant level.

### Brief Description of Drawings

[Fig. 1] Fig. 1 is a schematic circuit diagram showing an example of a circuit configuration of an air-conditioning apparatus according to Embodiment 1 of the present invention.
[Fig. 2] Fig. 2 is a schematic circuit diagram showing a refrigerant flow in a cooling operation mode of the air-conditioning apparatus according to Embodiment 1 of the present invention.
[Fig. 3] Fig. 3 is a schematic circuit diagram showing a refrigerant flow in a heating operation mode of the air-conditioning apparatus according to Embodiment 1 of the present invention.
[Fig. 4] Fig. 4 is a graph showing transition of the indoor temperature under conventional local thermostat control.
[Fig. 5] Fig. 5 is a flowchart showing a control operation performed by a controller under the local thermostat control of Fig. 4.
[Fig. 6] Fig. 6 is a graph showing transition of the indoor temperature under local thermostat control and an inverter control according to Embodiment 1 of the present invention.
[Fig. 7] Fig. 7 is a flowchart showing a control operation performed by a controller under the local thermostat control and the inverter control of Fig. 6.
[Fig. 8] Fig. 8 is a graph showing a relationship between a difference between the outdoor temperature and the indoor temperature and a predetermined operation time according to Embodiment 2 of the present invention.

### Description of Embodiments

Hereafter, Embodiments of the air-conditioning system of the present invention will be described with reference to the drawings. The configurations of the constituents illustrated in the drawings are merely exemplary, and not intended to limit the present invention to those configurations. In the drawings referred to hereafter, in addition, the constituents of the same reference numeral are identical or corresponding ones, which is to be applied throughout the description. Further, relations in size among constituents illustrated in the drawings may differ from actual ones.

### Embodiment 1

### [Configuration of Air-Conditioning System 100]

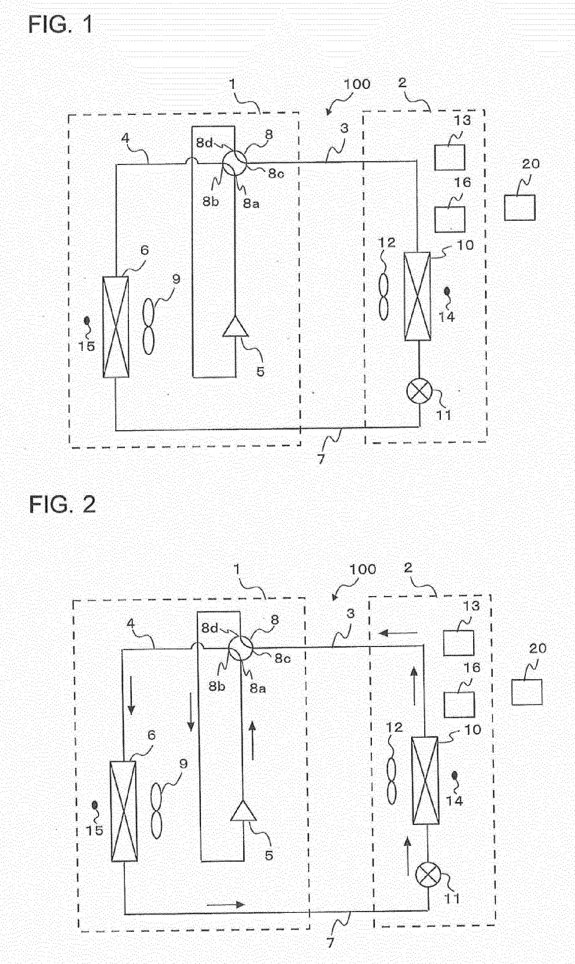

Fig. 1 is a schematic circuit diagram showing an example of a circuit configuration of an air-conditioning apparatus according to Embodiment 1 of the present invention. As shown in Fig. 1, the air-conditioning system 100 includes an outdoor unit 1 and an indoor unit 2, and is configured to control a compressor 5 with a local thermostat 20. The outdoor unit 1 and the indoor unit 2 are connected to each other via a refrigerant main pipe 3 and a refrigerant main pipe 7.

### [Configuration of Outdoor Unit 1]

The outdoor unit 1 includes the compressor 5, a switching valve 8 such as a four-way valve, and a heat source-side heat exchanger 6, which are connected to each other via a refrigerant pipe 4. The outdoor unit 1 also includes an air-sending device 9 and an outdoor temperature sensor 15. The compressor 5 sucks low-temperature and low-pressure refrigerant and compresses the sucked refrigerant into high-temperature and high-pressure, and is constituted of, for example, an inverter compressor with variable capacity. The air-sending device 9 is located in the vicinity of the heat source-side heat exchanger 6, to supply air to the heat source-side heat exchanger 6. The heat source-side heat exchanger 6 acts as condenser in a cooling operation and acts as evaporator in a heating operation, to exchange heat between the air supplied from the air-sending device 9 such as a fan and the refrigerant. The switching valve 8 switches the flow of the refrigerant between a cooling operation mode and a heating operation mode to be subsequently described. The outdoor temperature sensor 15 is constituted of a thermistor for example, and detects the temperature of outdoor air.

### [Configuration of Indoor Unit 2]

The indoor unit 2 includes an air-sending device 12, a load-side heat exchanger 10, an expansion device 11, a controller 13, an indoor temperature sensor 14, and an inverter 16. The indoor unit 2 is connected to the outdoor unit 1 via the refrigerant main pipe 3 and the refrigerant main pipe 7, so that the refrigerant flows in and out. Thus, the compressor 5, the heat source-side heat exchanger 6, the expansion device 11, and the load-side heat exchanger 10 are sequentially connected via the pipe, and constitute a refrigerant circuit of the air-conditioning system 100.

The load-side heat exchanger 10 exchanges heat between the air supplied from the air-sending device 12 such as a fan and the refrigerant, to thereby generate air for heating or air for cooling to be supplied to an indoor space. The expansion device 11 has a function of a reducing valve or expansion valve, which depressurizes and expands the refrigerant, and is preferably constituted of a device with variable opening degree, such as an electronic expansion valve. The indoor temperature sensor 14 is constituted of a thermistor for example, and detects the temperature of indoor air.

The controller 13 is constituted of a microcomputer for example, and acquires indoor temperature information from the indoor temperature sensor 14 and outdoor temperature information from the outdoor temperature sensor 15. The controller 13 also controls the inverter 16 in accordance with an instruction from the local thermostat 20 to be subsequently described, to control the output frequency of the compressor 5 and the rotation speed of the air-sending device 9 provided for the heat source-side heat exchanger 6. Further, the controller 13 controls the switching of the switching valve 8 and the opening degree of the expansion device 11, to thereby perform the cooling operation mode and the heating operation mode to be subsequently described. The inverter 16 drives the compressor 5 in accordance with an instruction from the controller 13.

### [Local Thermostat 20]

First, an air-conditioning system that employs the conventional remote controller instead of the local thermostat 20 will be described. The conventional remote controller transmits, upon being activated, a target temperature specified in the remote controller to the controller. The controller calculates the difference between the indoor temperature detected by the indoor temperature sensor and the target temperature, and causes the inverter to control the output frequency of the compressor to bring the indoor temperature close to the target temperature. Such an operation of the controller to control the operation frequency of the compressor according to the target temperature will hereinafter be referred to as inverter control. Here, the outdoor unit constituting a part of the air-conditioning system may be provided with the controller and the inverter for controlling the compressor, and the controller of the outdoor unit and the controller of the indoor unit may communicate with each other.

Now, the local thermostat 20 is a device having the functions of the remote controller and the thermostat, as well as a control function of the compressor 5. When a user specifies a target of the indoor temperature in the local thermostat 20, the local thermostat 20 compares the indoor temperature detected by the thermostat with the target temperature. The local thermostat 20 then transmits an ON or OFF signal with respect to the compressor 5 to the controller 13, depending on the comparison result. The controller 13 activates the compressor 5 upon receipt of the ON signal for the compressor 5, and turns off the compressor 5 upon receipt of the OFF signal for the compressor 5. Such a control operation of the local thermostat 20 to activate and turn off the compressor 5 will hereinafter be referred to as local thermostat control.

The local thermostat 20 does not transmit the information of the target indoor temperature to the controller 13 in the local thermostat control, and therefore the controller 13 is unable to acquire information on the magnitude of the air-conditioning load. Accordingly, the controller 13 can only cause the compressor 5 to perform the maximum frequency operation (MAX-Hz operation) upon receipt of the ON signal for the compressor 5, or turn off the compressor 5 upon receipt of the OFF signal for the compressor 5. Here, the ON signal for the compressor 5 corresponds to the thermostat-ON signal in the present invention. The OFF signal for the compressor 5 corresponds to the thermostat-OFF signal in the present invention.

### [Cooling Operation Mode]

Fig. 2 is a schematic circuit diagram showing the refrigerant flow in the cooling operation mode of the air-conditioning apparatus according to Embodiment 1 of the present invention. As shown in Fig. 2, in the cooling operation mode the switching valve 8 is set such that a first port 8a and a second port 8b communicate with each other and a third port 8c and a fourth port 8d communicate with each other. Accordingly, the refrigerant flows as indicated by solid line arrows in Fig. 2.

In the cooling operation mode, the low-temperature and low-pressure refrigerant is compressed by the compressor 5 thus to be turned into high-temperature and high-pressure gas refrigerant, and discharged from the compressor 5. The high-temperature and high-pressure gas refrigerant discharged from the compressor 5 flows into the heat source-side heat exchanger 6 through the switching valve 8. The high-temperature and high-pressure gas refrigerant which has entered the heat source-side heat exchanger 6 is condensed by transferring heat to the outdoor air, thereby turning into high-pressure liquid refrigerant. Then the high-pressure liquid refrigerant which has flowed out of the heat source-side heat exchanger 6 flows out of the outdoor unit 1 and into the indoor unit 2, through the refrigerant main pipe 7.

The high-pressure liquid refrigerant which has entered the indoor unit 2 is depressurized by the expansion device 11 into low-temperature and low-pressure two-phase refrigerant, and then flows into the load-side heat exchanger 10 acting as evaporator. Then the low-temperature and low-pressure two-phase refrigerant removes heat from the indoor air thereby cooling the indoor air, and turns into low-temperature and low-pressure gas refrigerant. The low-temperature and low-pressure gas refrigerant which has flowed out of the load-side heat exchanger 10 flows into the outdoor unit 1 through the refrigerant main pipe 3. The refrigerant which has flowed into the outdoor unit 1 is sucked into the compressor 5 through the switching valve 8. With such circulation of the refrigerant, the cooling operation is performed.

### [Heating Operation Mode]

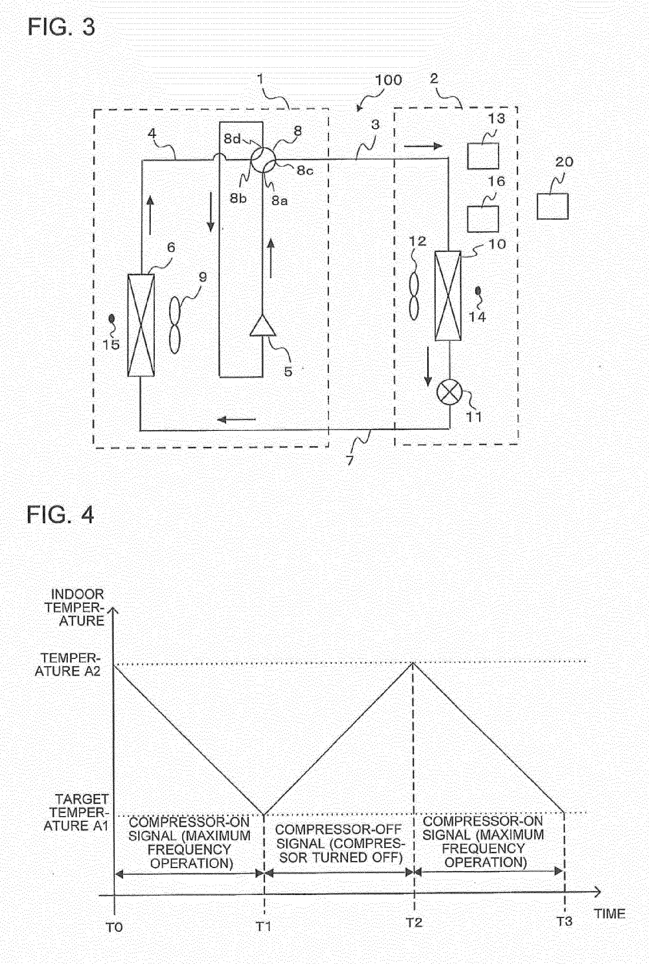

Fig. 3 is a schematic circuit diagram showing the refrigerant flow in the heating operation mode of the air-conditioning apparatus according to Embodiment 1 of the present invention. As shown in Fig. 3, in the heating operation mode the switching valve 8 is set such that the first port 8a and the third port 8c communicate with each other and the second port 8b and the fourth port 8d communicate with each other. Accordingly, the refrigerant flows as indicated by solid line arrows in Fig. 3.

In the heating operation mode, the low-temperature and low-pressure refrigerant is compressed by the compressor 5 thus to be turned into high-temperature and high-pressure gas refrigerant, and discharged from the compressor 5. The high-temperature and high-pressure gas refrigerant discharged from the compressor 5 flows into the indoor unit 2 through the switching valve 8 and the refrigerant main pipe 3. The high-temperature and high-pressure gas refrigerant which has entered the indoor unit 2 transfers heat to the indoor air in the load-side heat exchanger 10, thereby turning into high-pressure liquid refrigerant and flows into the expansion device 11. Then the high-pressure liquid refrigerant is depressurized by the expansion device 11 into low-temperature and low-pressure two-phase refrigerant, and flows out of the indoor unit 2 and into the outdoor unit 1, through the refrigerant main pipe 7.

The low-temperature and low-pressure two-phase refrigerant which has entered the outdoor unit 1 removes heat from the outdoor air in the heat source-side heat exchanger 6, thereby turning into low-temperature and low-pressure gas refrigerant. The low-temperature and low-pressure gas refrigerant which has flowed out of the heat source-side heat exchanger 6 is sucked into the compressor 5 through the switching valve 8. With such circulation of the refrigerant, the heating operation is performed.

Fig. 4 is a graph showing the transition of the indoor temperature under conventional local thermostat control. The air-conditioning system 100 is configured to perform the cooling operation mode and the heating operation mode, out of which the local thermostat control of the air-conditioning system 100 in the cooling operation mode will be described as an example. Referring to Fig. 4, the vertical axis represents the indoor temperature, and the horizontal axis represents the time. Here, the target temperature A1 and a reference temperature A2 which serves as threshold for transmitting the ON signal for the compressor 5 are specified in the local thermostat 20.

Between a time point T0 and a time point T1, the controller 13 is receiving the ON signal for the compressor 5 from the local thermostat 20, and is hence driving the compressor 5 to perform the maximum frequency operation. With such operation of the compressor 5, the indoor temperature drops from A2 to the target temperature A1. Between the time point T1 and a time point T2, the controller 13 is receiving the OFF signal for the compressor 5 from the local thermostat 20, and hence turns off the compressor 5. Because the compressor 5 is off, the indoor temperature is heated by the outdoor air, and rises from the target temperature A1 to the temperature A2. Then between the time point T2 and a time point T3, the controller 13 is receiving the ON signal for the compressor 5 from the local thermostat 20, and is hence driving the compressor 5 to perform the maximum frequency operation. With such operation of the compressor 5, the indoor temperature drops from A2 to the target temperature A1.

As described above, in the case of the local thermostat control, although the indoor temperature once reaches the target temperature A1, the compressor 5 is turned off at this point and therefore the indoor temperature again rises to the temperature A2. Accordingly, the indoor temperature is unable to be constantly maintained at the target temperature A1. Therefore, after the indoor temperature reaches the target temperature A1, it is desirable to perform the inverter control to be hereafter described, to thereby maintain the indoor temperature at the target temperature A1.

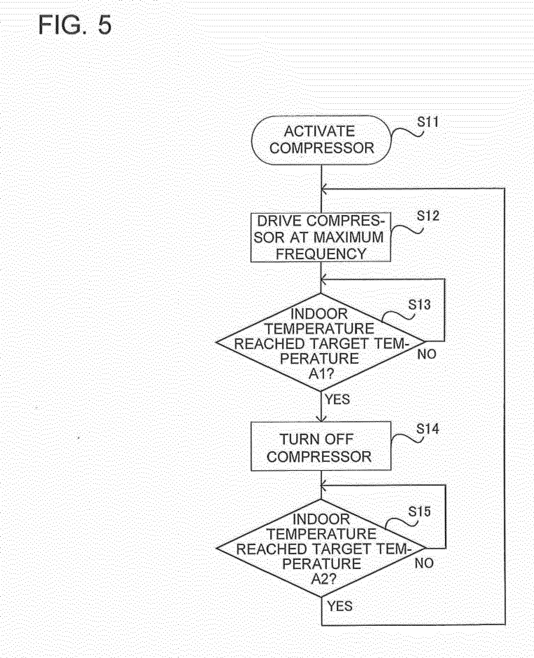

Fig. 5 is a flowchart showing a control operation performed by the controller 13 under the local thermostat control of Fig. 4. Hereunder, the control operation of the controller 13 will be described following the steps specified in Fig. 5, while referring also to Fig. 1.

### (Step S11)

The controller 13 activates the compressor 5, and then proceeds to step S12.

### (Step S12)

The controller 13 receives the ON signal for the compressor 5, and causes the compressor 5 to perform the maximum frequency operation. Then the controller 13 proceeds to step S13.

### (Step S13)

The controller 13 decides whether the indoor temperature has reached the target temperature A1. In the case where the indoor temperature has reached the target temperature A1, the controller 13 proceeds to step S14. Otherwise, the controller 13 proceeds to step S13.

### (Step S14)

The controller 13 receives the OFF signal for the compressor 5, and turns off the compressor 5. Then the controller 13 proceeds to step S15.

### (Step S15)

The controller 13 decides whether the indoor temperature has reached the temperature A2. In the case where the indoor temperature has reached the temperature A2, the controller 13 proceeds to step S12. Otherwise, the controller 13 proceeds to step S15.

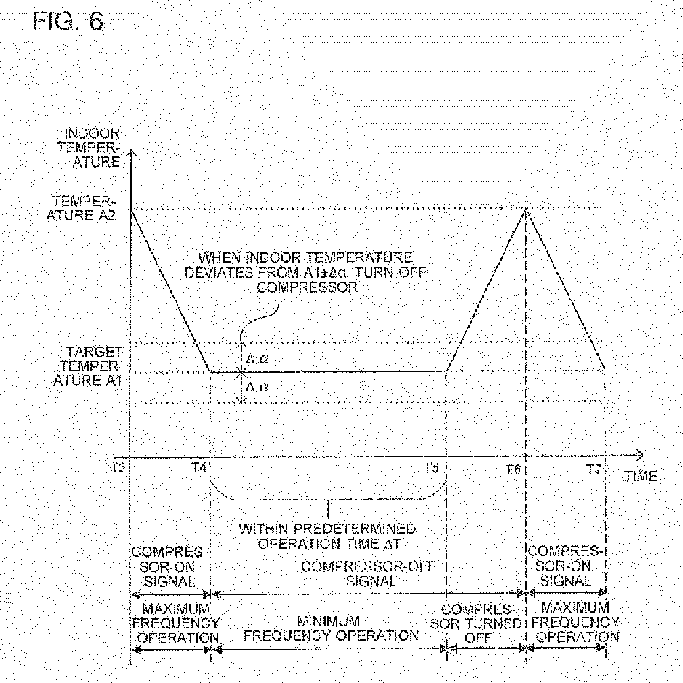

Fig. 6 is a graph showing the transition of the indoor temperature under the local thermostat control and the inverter control according to Embodiment 1 of the present invention. The air-conditioning system 100 is configured to perform the cooling operation mode and the heating operation mode, out of which the local thermostat control of the air-conditioning system 100 in the cooling operation mode will be described as an example. Referring to Fig. 6, the vertical axis represents the indoor temperature, and the horizontal axis represents the time. Here, the target temperature A1 and the reference temperature A2 which serves as threshold for transmitting the ON signal for the compressor 5 are specified in the local thermostat 20.

Between the time point T3 and a time point T4, the controller 13 is receiving the ON signal for the compressor 5 from the local thermostat 20, and hence controls the inverter 16 so as to cause the compressor 5 to perform the maximum frequency operation. With such operation of the compressor 5, the indoor temperature drops from A2 to the target temperature A1.

At the time point T4, the indoor temperature reaches the target temperature A1, and hence the controller 13 receives the OFF signal for the compressor 5 from the local thermostat 20. Upon receipt of the OFF signal, the controller 13 shifts to the inverter control from the local thermostat control, and continues with the inverter control up to a time point T5. More specifically, the controller 13 controls the inverter 16 to control the output frequency of the compressor 5, so as to maintain the difference between the indoor temperature and the target temperature A1 within a predetermined range, during the period between the time point T4 and the time point T5. Here, the operation of the compressor 5 at the output frequency set in this case will hereinafter be referred to as minimum frequency operation (min-Hz operation). Although the controller 13 is unable to acquire the information of the target temperature A1 from the local thermostat 20, the controller 13 can perform the inverter control by acquiring the indoor temperature information from the indoor temperature sensor 14 and assuming that the indoor temperature at the time of receiving the OFF signal for the compressor 5 is the target temperature A1.

Then at the time point T5, the controller 13 shifts from the inverter control to the local thermostat control. The inverter control is shifted to the local thermostat control when one of the following three conditions is satisfied. A first condition is that the indoor temperature exceeds a range defined by a permissible temperature difference Δα from the target temperature A1. A second condition is that the time during which the inverter control has been performed exceeds a predetermined operation time ΔT. A third condition is that the local thermostat 20 transmits the ON signal to the controller 13. Here, the permissible temperature difference Δα and the predetermined operation time ΔT are stored in advance in the controller 13.

As described above, the controller 13 shifts from the inverter control to the local thermostat control at the time point T5. After entering the local thermostat control, the controller 13 turns off the compressor 5 upon receipt of the OFF signal for the compressor 5, and drives the compressor 5 at the maximum frequency upon receipt of the ON signal for the compressor 5. Between the time point T5 and a time point T6 the controller 13 is receiving the OFF signal for the compressor 5 from the local thermostat 20, and hence controls the inverter 16 to turn off the compressor 5. Accordingly, the indoor temperature rises from A1 to A2, and at the time point T6 where the indoor temperature reaches A2 the local thermostat 20 transmits the ON signal for the compressor 5 to the controller 13. Then between the time point T6 and a time point T7, the controller 13 is receiving the ON signal for the compressor 5 from the local thermostat 20, and hence controls the inverter 16 to cause the compressor 5 to perform the maximum frequency operation. With such operation of the compressor 5, the indoor temperature drops from A2 to A1.

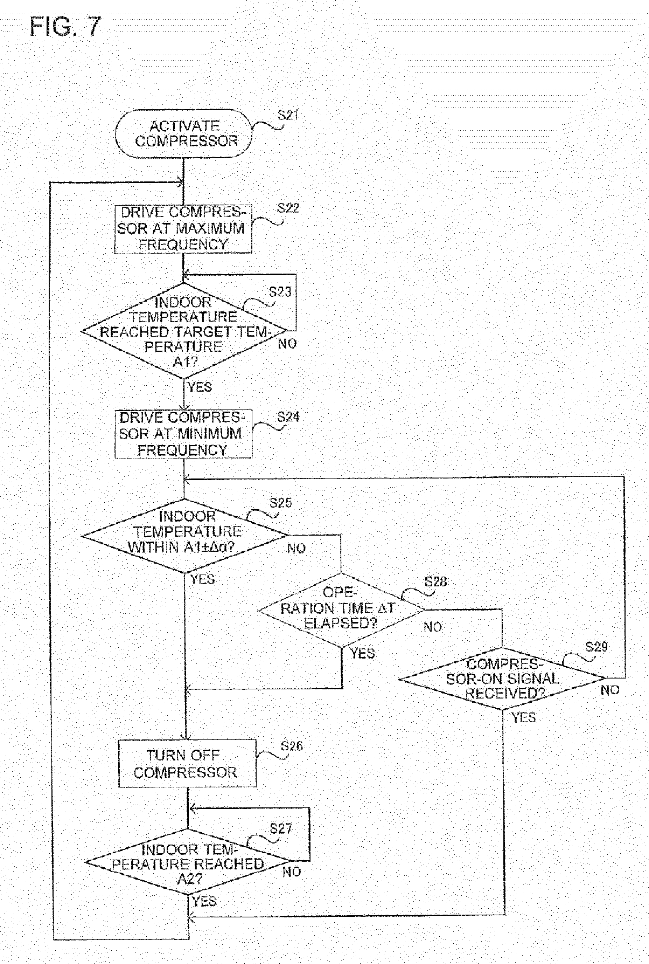

Fig. 7 is a flowchart showing the control operation performed by the controller 13 under the local thermostat control and the inverter control of Fig. 6. Hereunder, the control operation of the controller 13 will be described following the steps specified in Fig. 7, while referring also to Fig. 1.

### (Step S21)

The controller 13 activates the compressor 5, and then proceeds to step S22.

### (Step S22)

The controller 13 receives the ON signal for the compressor 5, and causes the compressor 5 to perform the maximum frequency operation (starts the local thermostat control). Then the controller 13 proceeds to step S23.

### (Step S23)

The controller 13 decides whether the indoor temperature has reached the target temperature A1. In the case where the indoor temperature has reached the target temperature A1, the controller 13 proceeds to step S24. Otherwise, the controller 13 proceeds to step S23.

### (Step S24)

The controller 13 receives the OFF signal for the compressor 5, and causes the compressor 5 to perform the minimum frequency operation (starts the inverter control). Then the controller 13 proceeds to step S25.

### (Step S25)

The controller 13 decides whether the indoor temperature is within the range defined by the permissible temperature difference Δα from the target temperature A1. When the indoor temperature is within the range defined by the permissible temperature difference Δα from the target temperature A1, the controller proceeds to step S26. Otherwise, the controller 13 proceeds to step S28.

### (Step S26)

The controller 13 turns off the compressor 5, and proceeds to step S27.

### (Step S27)

The controller 13 decides whether the indoor temperature has reached A2. In the case where the indoor temperature has reached A2, the controller proceeds to step S22. Otherwise, the controller 13 proceeds to step S27.

### (Step S28)

The controller 13 decides whether the time during which the inverter 16 has been in operation has exceeded the predetermined operation time ΔT. In the case where the time during which the inverter 16 has been in operation has exceeded the predetermined operation time ΔT, the controller proceeds to step S26. Otherwise, the controller 13 proceeds to step S29.

### (Step S29)

The controller 13 decides whether the local thermostat 20 has transmitted the ON signal to the controller 13. In the case where the local thermostat 20 has transmitted the ON signal to the controller 13, the controller 13 proceeds to step S22. Otherwise, the controller 13 proceeds to step S25.

As described above, the air-conditioning system 100 assumes that the temperature information acquired from the indoor temperature sensor 14 is the target temperature A1, and shifts to the inverter control from the local thermostat control. Such an arrangement prevents the compressor 5 from being frequently turned on and off, thereby suppressing the power consumption and enabling the indoor temperature to be maintained at a constant level, thus to maintain the comfort in the room.

In addition, setting the foregoing three conditions for shifting from the inverter control to the local thermostat control provides the following three advantageous effects. First, even when the indoor temperature deviates from the range defined by the permissible temperature difference Δα from the target temperature A1, the indoor temperature can be promptly brought back to the target temperature A1 by shifting to the local thermostat control from the inverter control. Second, even when the target temperature A1 is changed through the local thermostat 20 during the inverter control, the operation is shifted to the local thermostat control after the predetermined operation time ΔT has elapsed, and therefore the air-conditioning system 100 can be operated on the basis of the modified target temperature A1. Third, in the case where the controller 13 receives the ON signal for the compressor 5 during the inverter control, it can be assumed that the target temperature A1 has been modified, or the indoor temperature has exceeded the range defined by the permissible temperature difference Δα from the target temperature A1. Therefore, the operation can be shifted to the local thermostat control, so as to bring the indoor temperature close to the target temperature A1.

Although the local thermostat control and the inverter control of the air-conditioning system 100 in the cooling operation mode has been described in Embodiment 1, the present invention is not limited to such operation, and the similar control can be performed also in the heating operation mode. In addition, although the air-conditioning system 100 according to Embodiment 1 is configured to perform both the cooling operation and the heating operation, the air-conditioning system 100 may be configured to perform only either of the cooling operation and the heating operation. The above also applies to Embodiment 2 described hereunder.

### Embodiment 2

The air-conditioning system 100 according to Embodiment 2 is configured basically in the same way as the air-conditioning system 100 of Embodiment 1, and therefore Embodiment 2 will be described primarily focusing on the difference from Embodiment 1. The difference of Embodiment 2 from Embodiment 1 is that the former is configured to vary the predetermined operation time ΔT during which the inverter control is performed.

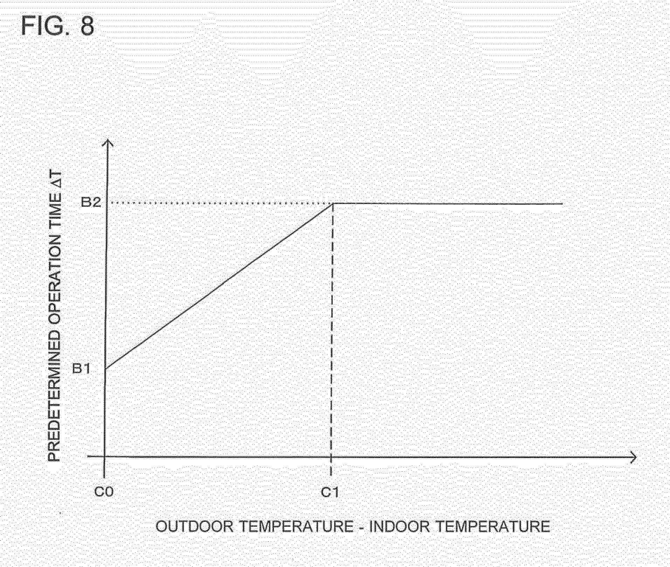

Fig. 8 is a graph showing a relationship between the difference between the outdoor temperature and the indoor temperature and the predetermined operation time according to Embodiment 2 of the present invention. The air-conditioning system 100 is configured to perform the cooling operation mode and the heating operation mode, out of which the setting of the predetermined operation time ΔT in the air-conditioning system 100 in the cooling operation mode will be described as an example.

Referring to Fig. 8, the vertical axis of the graph represents the predetermined operation time ΔT, and the horizontal axis represents the difference between the outdoor temperature and the indoor temperature. When the difference between the outdoor temperature detected by the outdoor temperature sensor 15 and the indoor temperature detected by the indoor temperature sensor 14 is C0, the predetermined operation time ΔT is set to B1. In contrast, when the difference between the outdoor temperature detected by the outdoor temperature sensor 15 and the indoor temperature detected by the indoor temperature sensor 14 is C1, the predetermined operation time ΔT is set to B2. Thus, the controller 13 prolongs the predetermined operation time ΔT as the difference between the outdoor temperature and the indoor temperature increases. It is desirable, however, to specify an upper limit B2 of the predetermined operation time, so as to allow the operation to be shifted to the local thermostat control when the target temperature A1 is modified through the local thermostat 20.

The predetermined operation time ΔT during which the inverter control is performed is prolonged along with the increase of the difference between the outdoor temperature and the indoor temperature is set accordingly, thereby the impact of the outdoor temperature on the indoor temperature is minimized.

### Reference Signs List

1: outdoor unit, 2: indoor unit, 3: refrigerant main pipe, 4: refrigerant pipe, 5: compressor, 6: heat source-side heat exchanger, 7: refrigerant main pipe, 8: switching valve, 8a: first port, 8b: second port, 8c: third port, 8d: fourth port, 9: air-sending device, 10: load-side heat exchanger, 11: expansion device, 12: air-sending device, 13: controller, 14: indoor temperature sensor, 15: outdoor temperature sensor, 16: inverter, 20: local thermostat, 100: air-conditioning system

## Claims

1. An air-conditioning system comprising:
a refrigerant circuit in which a compressor, a heat source-side heat exchanger, an expansion device, and a load-side heat exchanger are sequentially connected by piping;
an inverter that drives the compressor;
an indoor temperature sensor that detects an indoor temperature; and
a controller that receives a thermostat ON signal and a thermostat OFF signal, and controls the inverter according to the thermostat ON signal and the thermostat OFF signal,
wherein the controller assumes, upon receipt of the thermostat OFF signal, that the indoor temperature detected when the thermostat OFF signal is received is a target temperature, and regulates an output frequency of the inverter so as to maintain a difference between the indoor temperature and the target temperature in a predetermined range.

2. The air-conditioning system of claim 1,
wherein the controller finishes controlling the inverter regulated at the output frequency when the indoor temperature exceeds a permissible temperature difference from the target temperature, and turns off the compressor or causes the compressor to perform at a maximum frequency.

3. The air-conditioning system of claim 1,
wherein the controller finishes controlling the inverter regulated at the output frequency when the thermostat ON signal is input, and turns off the compressor or causes the compressor to perform at a maximum frequency.

4. The air-conditioning system of claim 1,
wherein the controller finishes controlling the inverter regulated at the output frequency when a time during which the inverter is controlled at the output frequency exceeds a predetermined operation time, and turns off the compressor or causes the compressor to perform at a maximum frequency.

5. The air-conditioning system of claim 4, further comprising an outdoor temperature sensor that detects an outdoor temperature and transmits the outdoor temperature to the controller,
wherein the controller determines duration of the predetermined operation time depending on a difference between the indoor temperature and the outdoor temperature.
